(19) Europäisches Patentamt
European Patent Office
Office européen des brevets

(11) EP 4 715 005 A1

(12) EUROPEAN PATENT APPLICATION
published in accordance with Art. 153(4) EPC

(43) Date of publication:
**25.03.2026 Bulletin 2026/13**

(21) Application number: **24836201.4**

(22) Date of filing: **29.05.2024**

(51) International Patent Classification (IPC):
***C08K 3/013*** *(2018.01)* ***C08L 67/02*** *(2006.01)*
***C08K 3/26*** *(2006.01)*

(52) Cooperative Patent Classification (CPC):
**C08K 3/013; C08K 3/26; C08L 67/02**

(86) International application number:
**PCT/KR2024/007271**

(87) International publication number:
**WO 2025/009752 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 KR 20230087244**

(71) Applicant: **SK leaveo Co., Ltd.**
**Gyeonggi-do 16338 (KR)**

(72) Inventors:
- **CHOI, Yujin**
  **Seoul 03142 (KR)**
- **LEE, Deuk-Young**
  **Seoul 03142 (KR)**
- **KIM, Sangmin**
  **Seoul 03142 (KR)**

(74) Representative: **Isarpatent**
**Patent- und Rechtsanwälte PartG mbB**
**Friedrichstraße 31**
**80801 München (DE)**

# (54) BIODEGRADABLE RESIN COMPOSITION AND BIODEGRADABLE MOLDED PRODUCT COMPRISING SAME

(57) The present invention provides a biodegradable resin composition and a biodegradable molded article comprising same, the composition comprising a biodegradable resin and an inorganic filler, and having a hydrolysis resistance control index (W-C Index), represented by formula 1, of 0.5 to 1. [Formula 1] (See the description of the invention.) W-C Index = $\Delta$ Mn / 100 - IFC



Processed by Luminess, 75001 PARIS (FR)

## Description

## TECHNICAL FIELD

The present invention relates to a biodegradable resin composition and a biodegradable molded article including the same.

## Background Art

Recently, with increasing concern about environmental problems, there is a demand for solutions to the disposal problem of various household goods, particularly disposable products. Specifically, petroleum-based polymer materials are widely used in manufacturing various products such as films, fibers, packaging materials, bottles, containers, and the like because they are inexpensive and have excellent properties such as processability. However, they have disadvantages in that harmful substances are emitted when incinerated after the end of the product's lifespan, and it takes hundreds of years depending on the type to be completely decomposed naturally.

To overcome these limitations of petroleum-based polymer materials, research is being actively conducted on biodegradable resins that decompose within a relatively short period. As biodegradable resins, polylactic acid (PLA), polybutylene adipate terephthalate (PBAT), polybutylene succinate (PBS), and the like are being introduced as alternatives.

However, PLA lacks flexibility, and PBAT has poor mechanical properties, limiting its applications. To improve these problems, US Patent No. 9,096,758 discloses using a mixture of PBAT and a small amount of inorganic filler, as a biodegradable resin composition. However, due to still low mechanical properties and low resistance to moisture, there were limitations in replacing existing petroleum-based polymer materials.

## DETAILED DESCRIPTION OF THE INVENTION

## Technical Problem

The present invention to provide a biodegradable resin composition having excellent water resistance and mechanical properties, and a biodegradable molded article including the same.

## Solution to the Problem

In accordance with an aspect of the present invention, the above and other objects can be accomplished by the provision of a biodegradable resin composition, including:

a biodegradable resin; and
an inorganic filler,
wherein the biodegradable resin composition has a water resistance control index (W-C Index) of 0.5 to 1, as represented by Equation 1 below:

[Equation 1]

$$\text{W-C Index} = \Delta Mn / 100 - IFC$$

where $\Delta$Mn is a rate of change in a number average molecular weight of the biodegradable resin composition, as measured by the following first measurement method, and the Inorganic Filler Content (IFC) is a content (% by weight) of the inorganic filler based on the total weight of the biodegradable resin composition:

[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the

biodegradable resin sheet, a first number average molecular weight ($Mn_0$) is measured using Gel Permeation Chromatography (GPC).

3) After maintaining the sample at a temperature of 70°C and a relative humidity of 95% for 10 days, a second number average molecular weight ($Mn_1$) is measured using GPC.

4) The number average molecular weight change rate (ΔMn) is calculated by Equation 2 below:

[Equation 2]

$$[(Mn_0 - Mn_1) / Mn_0] \times 100$$

In an embodiment of the present invention, the first number average molecular weight ($Mn_0$) may be 50,000 g/mol to 65,000 g/mol.

In an embodiment of the present invention, the second number average molecular weight ($Mn_1$) may be 30,000 g/mol to 50,000 g/mol.

In an embodiment of the present invention, the number average molecular weight change rate (ΔMn) may be 40 % or less.

In an embodiment of the present invention, the inorganic filler may be included in a content of 30 % by weight to 90 % by weight based on the total weight of the biodegradable resin composition.

In an embodiment of the present invention, a rate of change in an inherent viscosity of the biodegradable resin of the sample may be 40% or less, as measured by a second measurement method below:

[Second measurement method]

1) After putting the sample into 50 ml of 2-chlorophenol and dissolving it at 100°C for 30 minutes, a first inherent viscosity (IVo) is measured using an automatic viscometer.

2) After maintaining the sample at a temperature of 70°C and a relative humidity of 95% for 10 days, a second inherent viscosity ($IV_1$) is measured using the automatic viscometer.

3) A rate (ΔIV) of change in the inherent viscosity is calculated by Equation 3 below:

[Equation 3]

$$[(IV_0 - IV_1) / IV_0] \times 100$$

In an embodiment of the present invention, the first inherent viscosity ($IV_0$) may be 0.3 dl/g to 1.0 dl/g.

In an embodiment of the present invention, the second inherent viscosity ($IV_1$) may be 0.2 dl/g to 0.6 dl/g.

In an embodiment of the present invention, an elongation at break of the sample according to ASTM D882 may be 200% to 800%.

In accordance with another aspect of the present invention, provided is a biodegradable molded article, including a biodegradable resin composition, wherein the biodegradable resin composition includes:

a biodegradable resin; and
an inorganic filler,
wherein the biodegradable resin composition has a water resistance control index (W-C Index) of 0.5 to 1, as represented by Equation 1 below:

[Equation 1]

$$\text{W-C Index} = \Delta Mn / 100 - IFC$$

where ΔMn is a rate of change in a number average molecular weight of the biodegradable resin composition, as measured by the following first measurement method, and the Inorganic Filler Content (IFC) is a content (% by weight) of the inorganic filler based on the total weight of the biodegradable resin composition:

[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate (ΔMn) is calculated by Equation 2 below:

[Equation 2]

$$[(Mn_0 - Mn_1) / Mn_0] \times 100$$

In an embodiment of the present invention, a rate of change in an inherent viscosity of the biodegradable resin of the sample is 40% or less, as measured by a second measurement method below:

[Second measurement method]

1) After putting the sample into 50 ml of 2-chlorophenol and dissolving it at 100°C for 30 minutes, a first inherent viscosity (IVo) is measured using an automatic viscometer.
2) After maintaining the sample at a temperature of 70°C and a relative humidity of 95% for 10 days, a second inherent viscosity ($IV_1$) is measured using the automatic viscometer.
3) A rate (ΔIV) of change in the inherent viscosity is calculated by Equation 3 below:

[Equation 3]

$$[(IV_0 - IV_1) / IV_0] \times 100$$

In an embodiment of the present invention, the biodegradable molded article may be a nonwoven fabric, a vacuum molded sheet, a blow molded article, or an injection molded article.

## Advantageous Effects of the Invention

Since a biodegradable resin composition according to the present invention includes a biodegradable resin, a biodegradable molded article including the biodegradable resin composition can be easily decomposed upon disposal, and can be commercialized in more diverse fields compared to existing biodegradable molded articles.
In addition, by controlling mechanical properties and a water resistance control index related to water resistance within specific ranges, the biodegradable resin composition according to the present invention can exhibit improved water resistance without deterioration of mechanical properties, such as tensile strength and elongation at break, thereby maintaining a certain degree of mechanical and chemical properties during a general use period.

## BEST MODE FOR CARRYING OUT THE INVENTION

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.
In the present specification or application, when a certain component is "included", this indicates that only the

component is included or the component may further include another component unless there is a different disclosure. In addition, it should be understood that all numerical ranges representing physical property values, dimensions, etc. of components described in the present specification or application are modified by the term 'about' in all cases unless otherwise specified.

Hereinafter, a biodegradable resin composition according to the present invention and a biodegradable molded article including the same are described.

<Biodegradable resin composition>

A biodegradable resin composition according to the present invention includes a biodegradable resin and an inorganic filler, and has a water resistance control index (W-C Index) of 0.5 to 1, represented by Equation 1 below:

[Equation 1]

$$\text{W-C Index} = \Delta Mn / 100 - IFC$$

where $\Delta$Mn is a rate of change in the number average molecular weight of the biodegradable resin composition, as measured by the following first measurement method, and the Inorganic Filler Content (IFC) is the content (% by weight) of the inorganic filler based on the total weight of the biodegradable resin composition:

[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate ($\Delta$Mn) is calculated by Equation 2 below:

[Equation 2]

$$[(Mn_0 - Mn_1) / Mn_0] \times 100$$

The biodegradable resin composition includes a biodegradable resin.

The biodegradable resin may include a diol ingredient and a dicarboxylic acid ingredient. Specifically, the biodegradable resin may include a first repeat unit and a second repeat unit. The first repeat unit may include a diol ingredient and an aromatic dicarboxylic acid ingredient, and the second repeat unit may include a diol ingredient and an aliphatic dicarboxylic acid ingredient.

The diol ingredient may include 1,4-butanediol or a derivative thereof. Based on the total mol number of the diol ingredient, the diol ingredient may include 1,4-butanediol or a derivative thereof in an amount of 95 mol% or more, 97 mol% or more, 98 mol% or more, 99 mol% or more, or 100 mol%. The diol ingredient may improve biodegradability, flexibility, and strength by including 1,4-butanediol or a derivative thereof. When the diol ingredient consists only of 1,4-butanediol, the improvement in biodegradability and strength may be maximized.

The diol ingredient may further include a second diol that is different from the first diol, which is 1,4-butanediol or a derivative thereof. The second diol may include one or more selected from the group consisting of propanediol, hexanediol, cyclohexanedimethanol, and ethylene glycol. Specifically, the second diol may include one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol. Based on the total mol number of the diol ingredient, the diol ingredient may include the second diol in an amount of 5 mol% or less, 3 mol% or less, 2 mol% or less, or 1 mol% or less.

The aromatic dicarboxylic acid ingredient may include one or more selected from the group consisting of terephthalic acid, dimethyl terephthalic acid, and derivatives thereof. Specifically, the aromatic dicarboxylic acid ingredient may be terephthalic acid or dimethyl terephthalic acid. Based on a total mol number of the dicarboxylic acid ingredient, the dicarboxylic acid ingredient may include the aromatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The aliphatic dicarboxylic acid ingredient may include one or more selected from the group consisting of adipic acid, succinic acid, and derivatives thereof. Specifically, the aliphatic dicarboxylic acid ingredient may be adipic acid or succinic acid. Based on a total mol number of the dicarboxylic acid ingredient, the dicarboxylic acid ingredient may include the aliphatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The molar ratio of the aromatic dicarboxylic acid ingredient to the aliphatic dicarboxylic acid ingredient may be 0.5 to 1.5:1, 0.6 to 1.5:1, 0.6 to 1.4:1, 0.7 to 1.4:1, 0.7 to 1.3:1, or 0.8 to 1.2:1.

The molar ratio of the diol ingredient to the dicarboxylic acid ingredient may be 0.5 to 2:1, 0.5 to 1.9:1, 0.5 to 1.8:1, 0.5 to 1.7:1, 0.6 to 1.7:1, 0.6 to 1.6:1, 0.7 to 1.5:1, or 0.9 to 1.2:1. When the range is satisfied, the biodegradability, strength, and processability of the biodegradable resin composition may be improved without discoloration such as yellowing.

The biodegradable resin may include polybutylene adipate terephthalate (PBAT), in which the first repeat unit may include a diol ingredient and an aromatic dicarboxylic acid ingredient and the second repeat unit may include a diol ingredient and an aliphatic dicarboxylic acid ingredient.

Specifically, the polybutylene adipate terephthalate may include a unit represented by Chemical Formula 1 below:

[Formula 1]

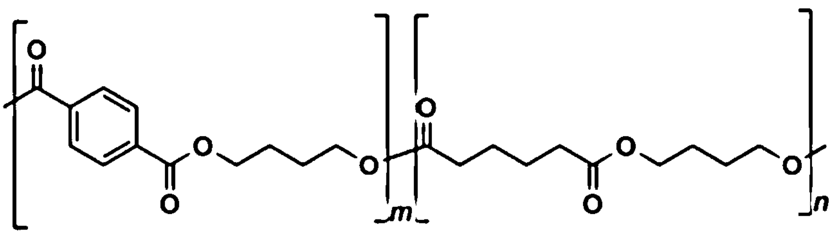

In Chemical Formula 1, m may be 1 to 20, and n may be 1 to 20.

The biodegradable resin composition may include a heterogeneous biodegradable resin in addition to the polybutylene adipate terephthalate. For example, the heterogeneous biodegradable resin may include one or more selected from the group consisting of polybutylene azelate terephthalate (PBAzT), polybutylene sebacate terephthalate (PBSeT), polybutylene succinate terephthalate (PBST), polyhydroxyalkanoate (PHA), and polylactic acid (PLA). The heterogeneous biodegradable resin may complement the mechanical properties of the polybutylene adipate terephthalate.

The polylactic acid may be a polylactic acid that has stereocomplex crystals and a high melting point. In addition, the polylactic acid may be formed by solution mixing or melt mixing of poly L-lactic acid and poly D-lactic acid.

Specifically, the polylactic acid may include a unit represented by Chemical Formula 2 below:

[Formula 2]

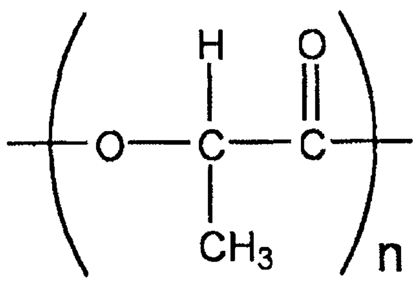

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, about 96 mol% to about 100 mol%, or about 97mol% to about 100 mol%. The poly L-lactic acid may include the D-lactic acid unit and/or a unit other than lactic acid. The poly L-lactic acid may include the D-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The poly D-lactic acid may be a polymer including primarily the D-lactic acid unit. The poly D-lactic acid may include the D-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, or about 97 mol% to about 100 mol%. The poly D-lactic acid may include the L-lactic acid unit and/or a unit other than lactic acid. The poly D-lactic acid may include the L-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azelaic acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The polyhydroxyalkanoate may include a unit represented by Chemical Formula 3 below:

[Formula 3]

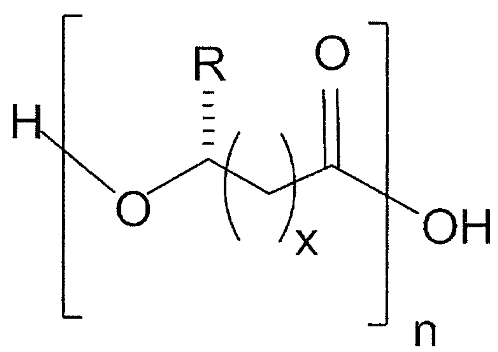

In Chemical Formula 3, R may be independently selected from the group consisting of a hydrogen atom, a hydrocarbon group, a hetero atom, and combinations thereof, n may be the number of repeat units from 1 to 35,000, and x may be an integer from 1 to 5.

The polyhydroxyalkanoate may be a homopolymer or copolymer consisting of at least one moiety selected from the group consisting of 3-hydroxypropionate, 3-hydroxybutyrate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, 3-hydroxydodecanoate, and combinations thereof. In addition, the moiety may have the same or different numbers of repeat units.

The polyhydroxyalkanoate may be a copolymer containing a 3-hydroxybutyrate unit and a 3-hydroxyhexanoate unit as main constituent units.

The polyhydroxyalkanoate may include 80 mol% or more of the 3-hydroxybutyrate unit as a component. The polyhydroxyalkanoate may include the 3-hydroxybutyrate unit in an amount of about 85 mol% or more.

The polyhydroxyalkanoate may be a poly(3-hydroxybutyrate-co-3-hydroxyhexanoate) copolymer resin or a poly(3-hydroxybutyrate-co-3-hydroxyvalerate-co-3-hydroxyhexanoate) copolymer resin.

For example, the polyhydroxyalkanoate may be produced using a microorganism such as Alcaligenes eutrophus AC 32 (International deposit based on the Budapest Treaty, International depositary authority: Independent Administrative Corporation Industrial Technology Research Institute Patent Biological Deposit Center (Central No. 6, 1-1, Tsukuba-shi, Ibaraki Prefecture, Japan), Original deposit date: August 12, 1996, Transferred on August 7, 1997, Deposit number: FERM BP-6038, Transferred from original deposit FERM P-15786, J. Bacteriol., 179, 4821 (1997)) created by introducing an Aeromonas caviae-derived PHA synthesizing enzyme gene into Alcaligenes eutrophus.

The polyhydroxyalkanoate may be available commercially. The commercially available products of the polyhydroxyalkanoate may include 「NODAX」 of Danimer Co., 「ENMAT」 of Tianan Biopolymer Co., 「PHACT」 of CJ Co., and 「Aonilex (registered trademark) X131N」, 「Aonilex (registered trademark) X131A」, 「Aonilex (registered trademark) 151A」, 「Aonilex (registered trademark) 151C」, 「PHBH (registered trademark) X331N」, 「PHBH (registered trademark) X131A」, 「PHBH (registered trademark) 151A」, and 「PHBH (registered trademark) 151C」 of Kaneka Co.

Based on the total weight of the biodegradable resin composition, the content of the biodegradable resin may be less than 90 % by weight, less than 89 % by weight, less than 88 % by weight, less than 87 % by weight, less than 86 % by weight, less than 85 % by weight, less than 80 % by weight, less than 70 % by weight, 10 % by weight or more and less than 85 % by weight, 10 % by weight or more and less than 80 % by weight, 10 % by weight or more and less than 70 % by weight, 20 % by weight or more and less than 70 % by weight, 25 % by weight or more and less than 70 % by weight, 28.8 % by weight or more and less than 70 % by weight, or 28.8 % by weight or more and 49.8 % by weight or less. When the range is satisfied, biodegradability is excellent, and water resistance may be improved without deterioration of mechanical properties.

The biodegradable resin composition includes an inorganic filler.

Based on the total weight of the biodegradable resin composition, the content of the inorganic filler may be 30 % by weight or more, 35 % by weight or more, 40 % by weight or more, 45 % by weight or more, 50 % by weight or more, 55 % by weight or more, 60 % by weight or more, 65 % by weight or more, 70 % by weight or more, 75 % by weight or more, 80 % by weight or more, 30 % by weight or more and 90 % by weight or less, 30 % by weight or more and 85 % by weight or less, 30 % by weight or more and 80 % by weight or less, 30 % by weight or more and 75 % by weight or less, 30 % by weight or more and 70 % by weight or less, 35 % by weight or more and 85 % by weight or less, 35 % by weight or more and 80 % by weight or less, 35 % by weight or more and 75 % by weight or less, 35 % by weight or more and 70 % by weight or less, 40 % by weight or more and 85 % by weight or less, 40 % by weight or more and 80 % by weight or less, 40 % by weight or more and 75 % by weight or less, 40 % by weight or more and 70 % by weight or less, 45 % by weight or more and 85 % by weight or less, 45 % by weight or more and 80 % by weight or less, 45 % by weight or more and 75 % by weight or less, or 45 % by weight or more and 70 % by weight or less. When the range is satisfied, production costs may be reduced, biodegradability and water resistance may be improved by increasing a biodegradation starting point, and the physical properties of the molded article may be improved by preventing a decrease in the dispersibility of the inorganic filler. Furthermore, since the specific gravity of the biodegradable molded article does not increase significantly, it may be used in a wider variety of products, and product reliability may be secured as the elongation at break and tensile strength of the product may be maintained.

The inorganic filler may have a specific surface area of 0.1 $m^2/g$ to 10.0 $m^2/g$, 0.1 $m^2/g$ to 9.0 $m^2/g$, 0.1 $m^2/g$ to 8.0 $m^2/g$, 0.1 $m^2/g$ to 7.0 $m^2/g$, 0.1 $m^2/g$ to 6.0 $m^2/g$, 0.1 $m^2/g$ to 5.0 $m^2/g$, 0.1 $m^2/g$ to 4.0 $m^2/g$, or 0.1 $m^2/g$ to 3.0 $m^2/g$. The specific surface area may be measured using a nitrogen gas adsorption method. When the range is satisfied, it may be easily dispersed in the biodegradable resin, promoting the biodegradability of the biodegradable resin and improving processability.

The inorganic filler may have an average particle diameter of 0.1 μm to 10.0 μm, 0.1 μm to 9.0 μm, 0.1 μm to 8.0 μm, 0.1 μm to 7.0 μm, 0.1 μm to 6.0 μm, 0.1 μm to 5.0 μm, 0.1 μm to 4.0 μm, 0.1 μm to 3.0 μm, 1.0 μm to 5.0 μm, 1.0 μm to 4.0 μm, or 1.0 μm to 3.0 μm. The average particle diameter may be calculated based on the measurement results of a specific surface area by an air permeation method using a specific surface area measuring device. When the range is satisfied, an increase in viscosity may be prevented when mixing the biodegradable resin and the inorganic filler, and particle size uniformity may be improved.

The inorganic filler may have a sphericity of 0.30 to 0.95, 0.30 to 0.93, 0.30 to 0.90, 0.50 to 0.95, 0.50 to 0.93, 0.50 to 0.90, 0.60 to 0.95, 0.60 to 0.93, or 0.60 to 0.90. When the range is satisfied, biodegradability may be improved by containing many fine pores generated at the interface between the biodegradable resin and the inorganic filler. In addition, the strength and molding processability of a molded article may be increased.

The inorganic filler may include one or more selected from the group consisting of calcium carbonate, magnesium carbonate, zinc oxide, titanium oxide, silica, alumina, kaolin clay, talc, mica, wollastonite, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, zeolite, diatomaceous earth, sericite, white sand, calcium sulfite, potassium titanate, bentonite, graphite, and ferrite.

Preferably, the inorganic filler may include calcium carbonate ($CaCO_3$). Generally, when a molded article manufactured using a biodegradable resin composition biodegrades, acid components may be generated. The acid components and the calcium carbonate may react to generate $CO_2$ and $H_2O$, so the biodegradation rate of the molded article into molecular units may be further increased. In addition, the calcium carbonate may neutralize the acid components, thereby reducing environmental load and preventing acidification of the soil.

The calcium carbonate may be heavy calcium carbonate obtained by mechanically grinding or classifying natural calcium carbonate containing $CaCO_3$ as a main ingredient, such as limestone, chalk, marble, shell, and coral.

The calcium carbonate may be surface-treated with an organic acid. By surface-treating the calcium carbonate with the organic acid, the dispersibility of the biodegradable resin composition may be increased and reactivity with the biodegradable resin may be improved. The surface treatment may be performed through a physical method such as plasma treatment and corona treatment or through a chemical method using a chemical agent such as a silane coupling agent, a titanium coupling agent, and a surfactant. The organic acid may include a higher fatty acid, a higher fatty acid ester, a higher fatty acid amide, and a higher fatty acid, for example, calcium stearate.

The surface-treated calcium carbonate may be prepared by the following method.

First, calcium carbonate powder may be prepared through a grinding process. Then, the calcium carbonate powder may be classified to obtain calcium carbonate of a desired particle size.

Then, the calcium carbonate may be heated at about 200 °C to about 800 °C using a heating device selected from a kiln, an electric furnace, or a microwave. The heat treatment time may be about 5 minutes to about 30 minutes, about 7 minutes to about 15 minutes, or about 7 minutes to about 14 minutes. The heat treatment temperature may be about 250 °C to about 700 °C or about 300 °C to about 600 °C. By heat treating the calcium carbonate under the conditions described above, moisture in the calcium carbonate may be easily removed, the organic acid may be easily bonded to the surface of the calcium carbonate, and agglomeration of the calcium carbonate may be minimized.

Next, a process of treating the surface of the calcium carbonate may be performed by adding an organic acid to the heat-treated calcium carbonate. The process temperature may be 70 °C to about 130 °C. Based on 100 parts by weight of the calcium carbonate, the organic acid may be added in an amount of about 0.5 parts by weight to about 5 parts by weight, about 0.5 parts by weight to about 4 parts by weight, about 0.5 parts by weight to about 3 parts by weight, about 0.5 parts by weight to about 2 parts by weight, about 0.6 parts by weight to about 5 parts by weight, about 0.6 parts by weight to about 4 parts by weight, about 0.6 parts by weight to about 3 parts by weight, about 0.6 parts by weight to about 2 parts by weight, about 0.7 parts by weight to about 5 parts by weight, about 0.7 parts by weight to about 4 parts by weight, about 0.7 parts by weight to about 3 parts by weight, or about 0.7 parts by weight to about 2 parts by weight. The process time may be about 1 minute to about 60 minutes, about 10 minutes to about 30 minutes, or about 5 minutes to about 20 minutes.

Next, the surface-treated calcium carbonate may be subjected to additional processes such as grinding and classifying aggregates generated in the surface treatment process. In the surface-treated calcium carbonate, based on a total weight, the content of the organic acid may be about 0.1 % by weight to about 3 % by weight, about 0.1 % by weight to about 2 % by weight, about 0.1 % by weight to about 1 % by weight, about 0.2 % by weight to about 3 % by weight, about 0.2 % by weight to about 2 % by weight, about 0.2 % by weight to about 1 % by weight, about 0.3 % by weight to about 3 % by weight, about 0.3 % by weight to about 2 % by weight, or about 0.3 % by weight to about 1 % by weight.

The surface-treated calcium carbonate may be partially oxidized by the organic acid. The surface-treated calcium carbonate may partially contain oxidized calcium (CaO). Based on 100 volume% of the surface-treated calcium carbonate particles, the ratio of the oxidized calcium may be 5 volume% or less, 4 volume% or less, 3 volume% or less, 2 volume% or less, 1 volume% or less, 0.01 volume% or more and 5 volume% or less, 0.01 volume% or more and 4 volume% or less, 0.01 volume% or more and 3 volume% or less, 0.01 volume% or more and 2 volume% or less, or 0.01 volume% or more and 1 volume% or less. The ratio of the oxidized calcium may be measured by ethylenediaminetetraacetic acid (EDTA) titration according to JIS R 9011. When the range is satisfied, the uniformity of the surface of the calcium carbonate may be improved, and the elution of organic acids from the surface of the calcium carbonate may be minimized, thereby improving water resistance.

The biodegradable resin composition may further include a reinforcing agent. The reinforcing agent may be a fiber derived from biomass. The reinforcing agent may include nanocellulose. The nanocellulose may be natural nanocellulose in the form of a gel or dry powder. The dispersion stability, strength, and processability of a biodegradable resin containing the nanocellulose may be improved.

The nanocellulose may have a diameter of 1 nm to 100 nm, 1 nm to 95 nm, 5 nm to 90 nm, 10 nm to 80 nm, 5 nm to 60 nm, or 15 nm to 60 nm. The nanocellulose may have a length of 5 nm to 5 μm, 5 nm to 1 μm, 10 nm to 700 nm, 20 nm to 500 nm, 60 nm to 300 nm, 80 nm to 200 nm, or 100 nm to 250 nm. When the range is satisfied, the mechanical strength of

the biodegradable resin composition may be further improved.

The nanocellulose may be in the form of dry powder or gel having aggregated secondary particles rather than single particles, and the size of the secondary particles may be 1 μm to 50 μm, 2 μm to 45 μm, or 5 μm to 50 μm. The nanocellulose may be in the form of freeze-dried powder to reduce the volume thereof for easy storage and transportation.

The nanocellulose may have an average particle diameter of 200 nm or less, 190 nm or less, or 185 nm or less. The particle diameter deviation may be 20 % or less, 18 % or less, or 16 % or less. When the range is satisfied, the dispersibility and durability of the nanocellulose may be improved.

The nanocellulose may function as a crystal nucleating agent that improves the crystallization rate of the biodegradable resin composition and increases the crystallization temperature of the biodegradable resin composition. The nanocellulose may include one or more selected from the group consisting of cellulose nanocrystals, cellulose nanofibers, and microfibrillated cellulose. In terms of strength and thermal properties, the cellulose nanocrystals or the cellulose nanofibers are preferred.

The nanocellulose may perform UV-resistant function and may impart adequate UV-resistant properties, biodegradation rate, and hydrolysis rate to the biodegradable resin. The nanocellulose may include one or more selected from the group consisting of hydroxymethyl cellulose, hydroxyethyl cellulose, hydroxypropyl cellulose, hydroxypropyl methyl cellulose, cellulose acetate, methyl cellulose, ethyl cellulose, propyl cellulose, butyl cellulose, pentyl cellulose, hexyl cellulose, and cyclohexyl cellulose.

The nanocellulose may be pretreated by a bead mill or ultrasonic waves. The nanocellulose may be water-dispersed nanocellulose pretreated with a bead mill or pretreated with ultrasonic waves.

The nanocellulose may be obtained by dispersing cellulose nanocrystals in the form of dry powder or gel with a particle diameter of 1 μm to 50 μm in water and then pre-treating the cellulose nanocrystals with a bead mill or ultrasonic waves. In this case, the number of nanocellulose particles may increase, thereby improving dispersibility.

Based on a total weight of the nanocellulose, the nanocellulose may be pre-treated with 0.01 to 10 % by weight, 0.05 to 8 % by weight, 0.1 to 8 % by weight, 0.5 to 6 % by weight, or 0.7 to 6 % by weight of a silane coupling agent. When the range is satisfied, interfacial adhesion, dispersibility, and compatibility may be maximized. Thus, the mechanical properties, durability, and water resistance of a biodegradable resin composition including the nanocellulose may be further improved.

The biodegradable resin may include the nanocellulose in an amount of 0.01 to 3 % by weight, 0.01 to 2.5 % by weight, 0.05 to 2 % by weight, 0.07 to 1.8 % by weight, 0.1 to 1.2 % by weight, 0.1 to 1 % by weight, or 0.15 to 0.7 % by weight, based on the total weight of the biodegradable resin. When the range is satisfied, the biodegradability and mechanical strength of the biodegradable resin composition may be further improved.

The biodegradable resin composition may include an oligomer. The oligomer may have a weight average molecular weight of about 400 g/mol to about 1,300 g/mol. Based on the weight of the biodegradable resin, the oligomer may be included in an amount of about 3,000 ppm to about 30,000 ppm, about 5,000 ppm to about 20,000 ppm, or about 5,000 ppm to about 15,000 ppm in the biodegradable resin composition. The oligomer may be a reaction product of at least two of the diol, the aromatic dicarboxylic acid, and the aliphatic dicarboxylic acid. The oligomer may be a reaction product of 1,4-butanediol, terephthalic acid, and adipic acid.

The biodegradable resin composition may include a plasticizer. The plasticizer may impart processability or flexibility to a molded article manufactured using the biodegradable resin composition. The plasticizer may be glycerol, an acrylate, glycerin, glycerol monostearate (GMS), sorbitol, or a mixture thereof. Based on the total weight of the biodegradable resin composition, the plasticizer may be included in an amount of less than 2.0 % by weight, 1.8 % by weight or less, 1.6 % by weight or less, 1.4 % by weight or less, 1.2 % by weight or less, or 1.0 % by weight or less. When the range is satisfied, flexibility may be imparted to a molded article manufactured from the biodegradable resin composition, and a certain degree of water resistance may be maintained during a general usage period by a user.

The biodegradable resin composition may include an antioxidant. The antioxidant may include one or more selected from the group consisting of a phosphorus-based antioxidant, a phenol-based antioxidant, and a pentaerythritol-based antioxidant.

The phosphorus-based antioxidant may include one or more selected from the group consisting of triesters of phosphorous acids such as triphenyl phosphite, trisnonylphenyl phosphite, and tris(2,4-di-t-butylphenyl)phosphite, diesters, monoesters, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

The phenol-based antioxidant may include one or more selected from the group consisting of α-tocopherol, butylhydroxytoluene, sinapyl alcohol, vitamin E, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2, 6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl)oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis[3-(3,5-di-tert-butyl-4-hydroxyphenyl)propionate], and tetrakis [3-(3,5-di-t-butyl-4-hydroxyphenyl)propionyloxymethyl]methane.

The antioxidant may further include one or more selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocatechin, propyl gallate, 2,3,5-trihydroxybutyrophenone, butylated hydroxyanisole, 4-hydroxymethyl-2,6-di-tert-butylphenol, $\alpha$-tocopherol, resveratrol, rutin, astaxanthin, lycopene, beta-carotene, and melatonin.

Based on the total weight of the biodegradable resin composition, the antioxidant may be included in an amount of 5 % by weight or less, 3 % by weight or less, 2 % by weight or less, 1.5 % by weight or less, 1 % by weight or less, 0.5 % by weight or less, 0.3 % by weight or less, 0 to 5 % by weight, 0.01 to 4 % by weight, 0.1 to 3 % by weight, 1 to 3 % by weight, 1 to 2 % by weight, 0.01 to 0.3 % by weight, 0.05 to 0.3 % by weight, 0.15 to 0.3 % by weight, or 0.2 to 0.3 % by weight.

The antioxidant may include both the phosphorus-based antioxidant and the phenol-based antioxidant. When the antioxidant includes both the phosphorus-based antioxidant and the phenol-based antioxidant, the weight ratio of the phosphorus-based antioxidant to the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5. When the range is satisfied, oxidation of the biodegradable resin composition may be delayed in various temperature ranges.

The biodegradable resin composition may include a heat stabilizer.

The heat stabilizer may be a phosphorus heat stabilizer. The heat stabilizer may include one or more selected from the group consisting of amine-based high-temperature heat stabilizers (e.g., tetraethylenepentamine), triethyl phosphonoacetate, phosphoric acid, phosphorous acid, polyphosphoric acid, trimethyl phosphate, triethyl phosphate, trimethyl phosphine, and triphenyl phosphine. The heat stabilizer may be an antioxidant that has an antioxidant function. Based on a total weight of the biodegradable resin, the heat stabilizer may be included in an amount of 3,000 ppm or less, 10 ppm to 3,000 ppm, 20 ppm to 2,000 ppm, 20 ppm to 1,500 ppm, or 20 ppm to 1,000 ppm.

The biodegradable resin composition may include a lubricant.

The lubricant may include one or more selected from the group consisting of fatty acid-based lubricants such as stearic acid; aliphatic alcohol-based lubricants; aliphatic amide-based lubricants such as stearamide; aliphatic ester-based lubricants such as stearic acid-n-butyl, hydroxystearic acid methyl, polyhydric alcohol fatty acid esters, saturated fatty acid esters, and ester wax; and fatty acid metal soap-based lubricants. Specifically, the lubricant may be a stearate-based lubricant, and may include one or more selected from the group consisting of calcium stearate, zinc stearate, barium stearate, magnesium stearate, glycerin stearate, and butyl stearate. The stearate-based lubricant may reduce heat generation due to friction during mixing, melting, and processing of raw materials, and has excellent dispersing and lubricating effects for a biodegradable polyester resin compared to its price, thereby improving manufacturing efficiency.

Based on the total weight of the biodegradable resin composition, the lubricant may be included in an amount of 5 % by weight or less, 4 % by weight or less, 3 % by weight or less, 2 % by weight or less, 1 % by weight or less, less than 1 % by weight, 0.9 % by weight or less, 0.8 % by weight or less, 0.7 % by weight or less, 0.5 % by weight or less, 0.3 % by weight or less, or 0.1 % by weight or less. When the range is satisfied, manufacturing efficiency may be improved without deteriorating the physical properties of the biodegradable resin composition.

The biodegradable resin composition may include a flame retardant. The flame retardant may include one or more selected from the group consisting of a halogen-based flame retardant, a phosphorus-based flame retardant, and a non-phosphorus halogen-based flame retardant such as metal hydrates.

The halogen-based flame retardant may include one or more selected from the group consisting of halogenated bisphenolic compounds such as halogenated bisphenyl alkanes, halogenated bisphenyl ethers, halogenated bisphenyl thioethers, and halogenated bisphenyl sulfones; and bisphenol-bis(alkyl ether) compounds such as brominated bisphenol A, brominated bisphenol S, chlorinated bisphenol A, and chlorinated bisphenol S.

The phosphorus-based flame retardant may include one or more selected from the group consisting of tris(diethyl phosphinic acid)aluminum, bisphenol A bis(diphenyl phosphate), phosphoric acid triaryl isopropyl, cresyl di-2,6-xylenyl phosphate, and aromatic condensation phosphoric acid ester.

The metal hydrates may include aluminum trihydrate, magnesium dihydroxide, or combinations thereof.

Flame retardant aids for improving the flame retardant effect may include one or more selected from the group consisting of antimony oxides such as antimony trioxide and antimony pentoxide, zinc oxide, iron oxide, aluminum oxide, molybdenum oxide, titanium oxide, calcium oxide, and magnesium oxide.

The biodegradable resin composition may include a foaming agent. The foaming agent may be mixed with the molten biodegradable resin composition or injected by applying pressure. The foaming agent may be a phase change from solid to gas or from liquid to gas or gas itself, and is used to control the foaming ratio (foaming density) of a foam sheet.

The foaming agent may include one or more selected from the group consisting of aliphatic hydrocarbons, alicyclic hydrocarbons, halogenated hydrocarbons, inorganic gases and water.

The biodegradable resin composition may include a dispersant. The dispersant may improve the dispersibility of a solvent and solute. The dispersant may include one or more selected from the group consisting of aliphatic polyesters, polylactic acid, polyglycolic acid, polycaprolactone, and polyhydroxyalkanoate.

Based on the total weight of the biodegradable resin composition, the dispersant may be included in an amount of

1 to 20 % by weight, 1 to 15 % by weight, 1 to 13 % by weight, 1 to 11 % by weight, 2 to 10 % by weight, 5 to 15 % by weight, 7 to 12 % by weight, 2 to 8 % by weight, 5 to 8 % by weight, or 2 to 5 % by weight.

The biodegradable resin composition may include a chain extender. The chain extender may include one or more selected from the group consisting of aromatic diisocyanates, aliphatic diisocyanates, isocyanurates, bisoxazolines, carboxylic acid anhydrides, and epoxides.

The aromatic diisocyanates may include one or more selected from the group consisting of tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, and xylylene diisocyanate.

The aliphatic diisocyanates may include one or more selected from the group consisting of 1,6-hexamethylene diisocyanate, isophorone diisocyanate, and methylene bis(4-isocyanatocyclohexane)..

The isocyanurates may include isophorone diisocyanate or methylene bis(4-isocyanatocyclohexane).

The bisoxazolines may include one or more selected from the group consisting of 2,2'-bis(2-oxazoline), bis(2-oxazolinyl)methane, 1,2-bis(2-oxazolinyl)ethane, 1,3-bis(2-oxazolinyl)propane, and 1,4-bis(2-oxazolinyl)butane.

The epoxide refers to an epoxy-containing copolymer based on at least one of styrene, acrylic acid ester, and/or methacrylic acid ester, and is preferably a copolymer having a glycidyl (meth)acrylate content of greater than 20, 30, or 50 % by weight.

Based on the total weight of the biodegradable resin composition, the chain extender may be included in an amount of 1.5 % by weight or less, 1.4 % by weight or less, 1.3 % by weight or less, 1.2 % by weight or less, 1.1 % by weight or less, 1 % by weight or less, 0.9 % by weight or less, 0.8 % by weight or less, 0.7 % by weight or less, 0.6 % by weight or less, 0.5 % by weight or less, 0.4 % by weight or less, 0.3 % by weight or less, 0 % by weight to 0.3 % by weight, 0.001 % by weight to 0.1 % by weight, 0.001 % by weight to 0.05 % by weight, 0.005 % by weight to 0.05 % by weight, 0.005 % by weight to 0.03 % by weight, or 0.005 % by weight to 0.002 % by weight.

A biodegradable molded article including the biodegradable resin composition requires biodegradability that allows it to be easily decomposed upon disposal. In particular, since mechanical strength and water resistance are affected by the composition of the biodegradable resin composition, it is very important not only to properly design the composition of the biodegradable resin composition but also to control physical properties, related to mechanical strength and water resistance, within desired ranges.

For example, as the content of the inorganic filler in the biodegradable resin composition increases, the content of the biodegradable resin in the biodegradable resin composition may relatively decrease. This means that the ratio of the biodegradable resin, capable of being decomposed by moisture, in the biodegradable resin composition decreases, so that the water resistance of the biodegradable resin composition may be improved. However, as the content of the inorganic filler increases in the biodegradable resin composition, the possibility of forming voids increases, which degrades mechanical properties such as tensile strength and elongation at break, potentially causing a problem that certain mechanical properties cannot be maintained during a general usage period required for biodegradable products.

On the other hand, when the biodegradable resin composition contains only the biodegradable resin or the content of the biodegradable resin increases, the content of the inorganic filler in the biodegradable resin composition may relatively decrease. This means that the possibility of forming voids in the molded article manufactured from the biodegradable resin composition decreases, so that the mechanical properties of the biodegradable resin composition may be improved. However, as the content of the biodegradable resin in the biodegradable resin composition increases, the ratio of the biodegradable resin capable of being decomposed by moisture increases, potentially causing a problem that certain chemical properties cannot be maintained during a general usage period required for biodegradable products.

Therefore, the present invention has a technical significance in that water resistance can be improved without deterioration of the mechanical properties, such as tensile strength and elongation at break, of the biodegradable resin composition by controlling the mechanical properties and the water resistance control index (W-C Index), related to water resistance, of the biodegradable resin composition to specific ranges.

The biodegradable resin composition according to the present invention has a water resistance control index (W-C Index) of 0.5 to 1, represented by Equation 1 below:

[Equation 1]

$$\text{W-C Index} = \Delta Mn / 100 - IFC$$

where $\Delta Mn$ is a rate of change in the number average molecular weight of the biodegradable resin composition, as measured by the following first measurement method, and the Inorganic Filler Content (IFC) is the content (% by weight) of the inorganic filler based on the total weight of the biodegradable resin composition:

[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate (ΔMn) is calculated by Equation 2 below:

[Equation 2]

$$[(Mn_0 - Mn_1) / Mn_0] \times 100$$

The water resistance control index (W-C Index) quantifies the relationship between the water resistance and mechanical properties of the biodegradable resin composition, and may vary depending on the number average molecular weight change rate (ΔMn), and the content (IFC) of the inorganic filler. The water resistance control index (W-C Index) means a ratio between numerical values except for units.

The water resistance control index (W-C Index) shows a higher value as the content (IFC) of the inorganic filler and the number average molecular weight change rate (ΔMn) decrease, and shows a lower value as the content (IFC) of the inorganic filler and the number average molecular weight change rate (ΔMn) increase.

The number average molecular weight change rate (ΔMn) may be an indicator indicating water resistance of the biodegradable resin composition. The molecular weight of the biodegradable resin composition may be reduced by hydrolysis, and the amount of decrease in its molecular weight may further increase as the hydrolysis of the biodegradable resin composition is accelerated. That is, as the amount of decrease in the second number average molecular weight ($Mn_1$) value, which is a number average molecular weight value after aging, compared to the first number average molecular weight ($Mn_o$) value, which is an initial number average molecular weight value, increases, the rate (ΔMn) of change in the number average molecular weight of the biodegradable resin composition increases, which may mean that the water resistance of the biodegradable resin composition decreases. In addition, maintaining the sample at a temperature of 70°C and a relative humidity of 95% for 10 days may have a meaning as an indicator representing that it can properly function during a normal usage period as a biodegradable molded article, even in a harsh environment of high temperature and high humidity, and that it can be biodegraded after the normal usage period has passed.

Therefore, as the water resistance control index (W-C Index) is lower, the water resistance of the biodegradable resin composition compared to the mechanical properties thereof may be degraded, and conversely, as the water resistance control index (W-C Index) is higher, the mechanical properties of the biodegradable resin composition compared to the water resistance thereof may be degraded.

The water resistance control index (W-C Index) may be 0.5 to 1, 0.55 to 1, 0.55 to 0.95, 0.60 to 0.95, or 0.60 to 0.90. When the water resistance control index (W-C Index) satisfies the above range, the water resistance of the biodegradable resin composition may be improved while maintaining its mechanical properties such as tensile strength and elongation at break.

The first number average molecular weight ($Mn_0$) may be 50,000 g/mol to 65,000 g/mol, 51,000 g/mol to 65,000 g/mol, 52,000 g/mol to 65,000 g/mol, 53,000 g/mol to 65,000 g/mol, 53,000 g/mol to 62,000 g/mol, or 53,000 g/mol to 60,000 g/mol. The second number average molecular weight ($Mn_1$) may be 30,000 g/mol to 50,000 g/mol, 31,000 g/mol to 50,000 g/mol, 32,000 g/mol to 50,000 g/mol, 32,000 g/mol to 47,000 g/mol, 32,000 g/mol to 45,000 g/mol, or 33,000 g/mol to 45,000 g/mol. The number average molecular weight change rate (ΔMn) may be 40 % or less, 39.9 % or less, 39.8 % or less, 39.7 % or less, 20 % or more and 40 % or less, 20 % or more and 39.9 % or less, 20 % or more and 39.8% or less, 20 % or more and 39.7 % or less, or 25 % or more and 39.7 % or less. When the above range is satisfied, water resistance may be improved while having high biodegradability, so that the manufactured biodegradable molded article may be easily decomposed upon disposal, and it may be commercialized in fields requiring water resistance.

The biodegradable resin composition may include a hydrolysis inhibitor. The hydrolysis inhibitor may include a carbodiimide-based compound. The carbodiimide-based compound may be a monomer or a polymer. The carbodiimide-based compound may react with moisture and acid to convert into a urea structure, thereby reducing the reactivity among moisture, acid, and an ester group included in a biodegradable resin, and thus reducing the phenomenon of the

biodegradable resin being hydrolyzed by moisture and acid. In conclusion, the water resistance of the biodegradable resin composition may be improved.

The carbodiimide-based compound may include a compound represented by Formula 5 below:

[Formula 4]

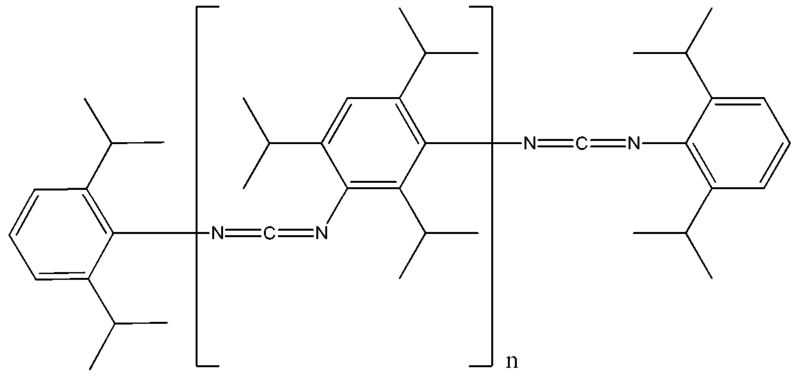

In Formula 4, n is an integer from 1 to 20.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-diketylphenylcarbodiimide, N-tolyl-N'cyclohexylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropyl diisocyanate.

The weight average molecular weight of the carbodiimide-based compound may be 500 g/mol to 50,000 g/mol, 600 g/mol to 50,000 g/mol, 700 g/mol to 50,000 g/mol, 800 g/mol to 50,000 g/mol, 900 g/mol to 50,000 g/mol, 1,000 g/mol to 50,000 g/mol, 1,000 g/mol to 40,000 g/mol, or 1,000 g/mol to 30,000 g/mol. The weight average molecular weight may be measured as a relative value to a standard polystyrene (PS) sample through GPC using THF as an eluent. When the range is satisfied, the mechanical properties and water resistance of the biodegradable resin composition may be improved.

Based on the total weight of the biodegradable resin composition, the content of the hydrolysis inhibitor may be 0.1 % by weight to 5.0 % by weight, 0.1 % by weight to 4.0 % by weight, 0.1 % by weight to 3.0 % by weight, 0.1 % by weight to 2.0 % by weight, 0.1 % by weight to 1.5 % by weight, or 0.1 % by weight to 1.0 % by weight. When the range is satisfied, the water resistance and odor reduction effect of the biodegradable resin composition may be improved.

A rate of change in the inherent viscosity of the sample manufactured from the biodegradable resin composition may be 40% or less, as measured by the following second measurement method:

[Second measurement method]

1) After putting the sample into 50 ml of 2-chlorophenol and dissolving it at 100°C for 30 minutes, a first inherent viscosity ($IV_0$) is measured using an automatic viscometer.
2) After maintaining the sample at a temperature of 70°C and a relative humidity of 95% for 10 days, a second inherent viscosity ($IV_1$) is measured using the automatic viscometer.
3) A rate ($\Delta$IV) of change in the inherent viscosity is calculated by Equation 3 below:

[Equation 3]

$$[(IV_0 - IV_1) / IV_0] \times 100$$

The inherent viscosity change rate ($\Delta$IV) may be an indicator representing the water resistance of the biodegradable resin composition. The inherent viscosity (IV) indicates the intrinsic physical properties of a polymer and may be used for measuring the molecular weight of the polymer. Since a higher inherent viscosity value may mean a

relatively larger molecular weight, the inherent viscosity change rate (ΔIV) may have a close relationship with the molecular weight change rate.

For example, the molecular weight of the biodegradable resin composition may be reduced by hydrolysis, and the amount of decrease in its molecular weight may further increase as the hydrolysis of the biodegradable resin composition is accelerated. Accordingly, as the hydrolysis of the biodegradable resin composition is accelerated, the inherent viscosity change rate (ΔIV) may increase.

That is, as the amount of decrease in the second inherent viscosity ($IV_1$) value, which is an inherent viscosity value after aging, compared to the first inherent viscosity ($IV_o$) value, which is an initial inherent viscosity value, increases, the rate (ΔIV) of change in the inherent viscosity of the biodegradable resin composition increases, which may mean that the water resistance of the biodegradable resin composition decreases.

The first inherent viscosity ($IV_0$) may be 0.3 dl/g to 1.0 dl/g, 0.3 dl/g to 0.9 dl/g, 0.3 dl/g to 0.8 dl/g, 0.3 dl/g to 0.7 dl/g, or 0.4 dl/g to 0.7 dl/g. The second inherent viscosity ($IV_1$) may be 0.2 dl/g to 0.6 dl/g, 0.25 dl/g to 0.6 dl/g, 0.28 dl/g to 0.6 dl/g, 0.3 dl/g to 0.6 dl/g, or 0.35 dl/g to 0.6 dl/g. The inherent viscosity change rate (ΔIV) may be 40 % or less, 35 % or less, 30 % or less, 25 % or less, 24 % or less, 23 % or less, 10 % or more to 40 % or less, 10 % or more to 35 % or less, 10 % or more to 30 % or less, 10 % or more to 25 % or less, 10 % or more to 24 % or less, 10 % or more to 23 % or less, or 15 % or more to 23 % or less. When the range is satisfied, the water resistance is improved, so that the manufactured biodegradable molded article may be easily decomposed upon disposal, and it may be commercialized in fields requiring water resistance.

<Biodegradable molded article>

The biodegradable molded article according to the present invention may be manufactured from the biodegradable resin composition. The biodegradable molded article may be manufactured by molding the biodegradable resin composition by a method known in the art, such as extrusion or injection, and the molded article may be a nonwoven fabric, a vacuum-formed sheet, a blown molded article, or an injection-molded article, but is not limited thereto. For example, the biodegradable molded article may be an agricultural mulching film, a cosmetic container, a diaper sheet, a bathroom supply, a gift box, a disposable glove, a food packaging material, a fabric, a knitted fabric, a rope, or a food packaging container. Since the biodegradable molded article may be manufactured from the biodegradable resin composition having excellent mechanical properties and water resistance, excellent properties may be exhibited when applied to a packaging material or a mulching film which requires dimensional stability against moisture or the like in an external environment.

The biodegradable molded article includes a biodegradable resin composition including a biodegradable resin and an inorganic filler and having a water resistance control index (W-C Index) of 0.5 to 1, as represented by Equation 1 below. The biodegradable resin and the inorganic filler may be the same as the biodegradable resin and inorganic filler of the biodegradable resin composition described above.

[Equation 1]

$$\text{W-C Index} = \Delta Mn / 100 - IFC$$

where ΔMn is a rate of change in the number average molecular weight of the biodegradable resin composition, as measured by the following first measurement method, and the Inorganic Filler Content (IFC) is the content (% by weight) of the inorganic filler based on the total weight of the biodegradable resin composition:

[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate (ΔMn) is calculated by Equation 2 below:

[Equation 2]

$$[(Mn_0 - Mn_1) / Mn_0] \times 100$$

The water resistance control index (W-C Index) may be 0.5 to 1, 0.55 to 1, 0.55 to 0.95, 0.60 to 0.95, or 0.60 to 0.90. When the water resistance control index (W-C Index) satisfies the range, the mechanical properties and water resistance of the biodegradable molded article may be improved.

In the sample, the rate of change in the inherent viscosity of the biodegradable resin, as measured by the following second measurement method, may be 40% or less:

[Second measurement method]

1) After putting the sample into 50 ml of 2-chlorophenol and dissolving it at 100°C for 30 minutes, a first inherent viscosity ($IV_0$) is measured using an automatic viscometer.
2) After maintaining the sample at a temperature of 70°C and a relative humidity of 95% for 10 days, a second inherent viscosity ($IV_1$) is measured using the automatic viscometer.
3) A rate (ΔIV) of change in the inherent viscosity is calculated by Equation 3 below:

[Equation 3]

$$[(IV_0 - IV_1) / IV_0] \times 100$$

The inherent viscosity change rate (ΔIV) may be 40 % or less, 35 % or less, 30 % or less, 25 % or less, 24 % or less, or 23 % or less. When the range is satisfied, the water resistance of the biodegradable molded article is improved, so that the biodegradable molded article may be easily decomposed upon disposal, and it may be commercialized in fields requiring water resistance.

The biodegradable resin composition included in the biodegradable molded article may include a hydrolysis inhibitor. The hydrolysis inhibitor may include a carbodiimide-based compound. The carbodiimide-based compound may be a monomer or a polymer.

The carbodiimide-based compound may include a compound represented by Formula 4 below:

[Formula 4]

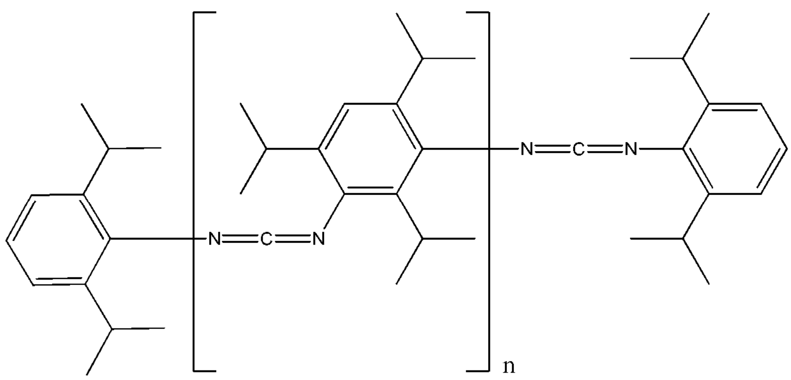

In Formula 4, n may be an integer from 1 to 20.

The biodegradable molded article may have an odor grade of 3 or less according to MS300-34. Specifically, after the biodegradable resin composition is cut according to the MS300-34 standard to prepare a sample, the odor may be determined as grades 1 to 6, and a lower odor grade means better odor characteristics. When the grade of 3 or less is satisfied, water resistance is improved, and odor is reduced, so that commercialization in more various fields is possible compared to a conventional biodegradable molded article, and product reliability may be improved.

The biodegradable molded article may be a biodegradable sheet. The thickness of the biodegradable sheet may be 5 μm to 1,000 μm, 10 μm to 1,000 μm, 15 μm to 1,000 μm, 20 μm to 1,000 μm, 25 μm to 1,000 μm, 30 μm to 1,000 μm,

35 $\mu$m to 1,000 $\mu$m, or 40 $\mu$m to 1,000 $\mu$m. The tensile strength of the biodegradable sheet may be 5 MPa or more, 6 MPa or more, 9 MPa or more, 10 MPa or more, 11 MPa or more, 12 MPa or more, 55 MPa or less, 54 MPa or less, 53 MPa or less, 52 MPa or less, 51 MPa or less, or 50 MPa or less. Tear strength of the biodegradable sheet may be 100 N/cm or more, 110 N/cm or more, 120 N/cm or more, 130 N/cm or more, 140 N/cm or more, 150 N/cm or more, 700 N/cm or less, 650 N/cm or less, 600 N/cm or less, 550 N/cm or less, or 500 N/cm or less. When the range is satisfied, the sheet is not easily torn, and the biodegradable molded article may be easily decomposed upon disposal.

The elongation at break of the biodegradable sheet based on ASTM D882 may be 100% to 1,000%, 200% to 1,000%, 200% to 1,000%, 200% to 900%, or 200% to 800%. When the above range is satisfied, the elasticity of the biodegradable molded article may be secured, so that it may withstand a certain load.

The biodegradable molded article may be a biodegradable film. The thickness of the biodegradable film may be 5 $\mu$m to 500 $\mu$m, 5 $\mu$m to 400 $\mu$m, 5 $\mu$m to 350 $\mu$m, 10 $\mu$m to 350 $\mu$m, 15 $\mu$m to 350 $\mu$m, 20 $\mu$m to 350 $\mu$m, 25 $\mu$m to 300 $\mu$m, 30 $\mu$m to 300 $\mu$m, 35 $\mu$m to 300 $\mu$m, or 40 $\mu$m to 300 $\mu$m. The tensile strength of the biodegradable film may be 5 MPa or more, 7 MPa or more, 9 MPa or more, 10 MPa or more, 11 MPa or more, 100 MPa or less, 95 MPa or less, 90 MPa or less, or 5 MPa or more to 100 MPa or less. When the ranges are satisfied, the film is not easily torn and has excellent mechanical properties, and the biodegradable molded article may be easily decomposed upon disposal.

The elongation at break of the biodegradable film based on ASTM D882 may be 100% to 1,200%, 200% to 1,200%, 300% to 1,200%, 400% to 1,200%, or 500% to 1,200%. When the range is satisfied, the elasticity of the biodegradable molded article may be secured, so that it may withstand a certain load..

<Method of manufacturing biodegradable molded article>

A method of manufacturing a biodegradable molded article according to the present invention may include step (a) of preparing a prepolymer by esterifying a diol ingredient and a dicarboxylic acid ingredient, step (b) of preparing a biodegradable resin by polycondensing the prepolymer, step (c) of preparing a biodegradable resin composition by mixing the biodegradable resin and an inorganic filler, step (d) of preparing pellets of the biodegradable resin composition, and step (e) of drying and melt-extruding the pellets.

The manufacturing method may include step (a) of preparing a prepolymer by esterifying a diol ingredient and a dicarboxylic acid ingredient.

The diol ingredient and the dicarboxylic acid ingredient may be the same as those of the above-described biodegradable resin composition. In step (a), the prepolymer may be prepared by performing a one-step esterification reaction of the diol ingredient, the dicarboxylic acid ingredient, and optionally, a composition containing the nanocellulose or by a two-step esterification reaction consisting of a first esterification reaction and a second esterification reaction.

The two-step esterification reaction may include step (a-1) of performing the first esterification reaction of the diol ingredient and the dicarboxylic acid ingredient and step (a-2) of performing the second esterification reaction by adding the diol ingredient and the dicarboxylic acid ingredient to the product of step (a-1).

When the biodegradable resin includes the nanocellulose, the binding strength of the nanocellulose may be improved by adding the nanocellulose in the second esterification reaction step. In addition, the binding force of the nanocellulose may be further improved by adding the water-dispersed nanocellulose in the second esterification reaction step.

The nanocellulose may be added at a temperature of 100 °C to 160 °C, 110 °C to 140 °C, or 110 °C to 150 °C. When the range is satisfied, solvent resistance may be improved.

The nanocellulose may be added at a rate of 2 kg/min to 10 kg/min, 2.5 kg/min to 9.5 kg/min, or 3 kg/min to 8 kg/min. When the range is satisfied, without causing re-agglomeration of the nanocellulose, the efficiency of the manufacturing process may be improved.

In step (a), a titanium-based catalyst, a germanium-based catalyst, an antimony-based catalyst, an additive, and a stabilizer may be added before the esterification reaction. The esterification reaction may be performed at a temperature of 250 °C or less, 240 °C or less, 235 °C or less, 180°C to 250 °C, 185 °C to 240 °C, or 180 °C to 240 °C for 0.5 hours to 5 hours, 0.5 hours to 4.5 hours, 0.5 hours to 3.5 hours, or 1 hour to 3 hours. The esterification reaction may be performed under normal pressure until the by-products water and methanol theoretically reach 90 %.

The prepolymer may have a number average molecular weight of 500 g/mol to 10,000 g/mol, 500 g/mol to 8,500 g/mol, 500 g/mol to 7,000 g/mol, 1,000 g/mol to 6,000 g/mol, or 2,500 g/mol to 5,500 g/mol. The number average molecular weight may be measured by gel permeation chromatography (GPC). When the range is satisfied, in the polycondensing reaction, the molecular weight of the prepolymer may be efficiently increased, thereby improving mechanical strength.

The manufacturing method may include step (b) of preparing a biodegradable resin by polycondensing the prepolymer.

The polycondensing reaction may be performed at a temperature of 180 °C to 280 °C, 190 °C to 270 °C, 210 °C to 260 °C, or 230 °C to 255 °C under a pressure of 1. Torr or less, 0.9 Torr or less, 0.7 Torr or less, 0.2 Torr to 1.0 Torr, 0.3 Torr to 0.9 Torr, or 0.5 Torr to 0.9 Torr for 1 hour to 6 hours, 1.5 hours to 5.5 hours, 2 hours to 5 hours, or 3.5 hours to 4.5 hours.

The biodegradable resin manufactured in step (b) may have an intrinsic viscosity of 0.05 to 10 dL/gr. The biodegradable resin may have a melt viscosity of 1,000 to 30,000 poise as measured under the condition of 100 $s^{-1}$ using a Rheometrics Dynamic Spectrometer (RDS). The biodegradable resin may have a number average molecular weight of 40,000 g/mol or more, 43,000 g/mol or more, 45,000 g/mol or more, or 40,000 g/mol to 70,000 g/mol. The biodegradable resin may have a weight average molecular weight of 60,000 g/mol or more, 65,000 g/mol or more, 75,000 g/mol or more, 80,000 g/mol or more, or 85,000 g/mol to 100,000 g/mol. The biodegradable resin may have a polydispersity index (PDI) of 1.2 to 2.0, 1.5 to 1.9, or 1.6 to 1.8. When the number average molecular weight, weight average molecular weight, or polydispersity index of the biodegradable resin satisfies the range, mechanical strength and processability may be further improved. The biodegradable resin may have an acid value of 1.8 mgKOH/g or less, 1.5 mgKOH/g or less, 1.3 mgKOH/g or less, or 1.25 mgKOH/g or less. When the range is satisfied, solvent resistance may be improved.

The manufacturing method may include step (c) of preparing a biodegradable resin composition by mixing the biodegradable resin and an inorganic filler.

The mixing may be set appropriately according to a molding method. For example, before feeding the biodegradable resin and inorganic filler into a molding machine through a hopper, the biodegradable resin and inorganic filler may be melt-kneaded. Alternatively, melt-kneading and molding of the biodegradable resin and inorganic filler may be performed simultaneously. It is desirable to perform kneading with high shear stress to uniformly distribute the inorganic filler in the biodegradable resin. Specifically, the kneading is preferably performed using a kneader reactor, an extrusion molding machine equipped with a single screw, or a twin-screw kneader. When necessary, in step (c), one or more of the plasticizer and the additive may be additionally added.

Step (c) may include one or more mixing steps. One-stage mixing step may be a single mixing step of preparing a biodegradable resin composition including the inorganic filler in an amount of 60 to 80 % by weight, 61 to 80 % by weight, 62 to 80 % by weight, 63 to 80 % by weight, 64 to 80 % by weight, 65 to 80 % by weight, 60 to 75 % by weight, 61 to 75 % by weight, 62 to 75 % by weight, 63 to 75 % by weight, 64 to 75 % by weight, 65 to 75 % by weight, or 65 to 72 % by weight based on the total weight of the biodegradable resin composition. A two-stage mixing step may include a first mixing step of preparing a biodegradable resin composition including the inorganic filler in an amount of 60 to 80 % by weight, 61 to 80 % by weight, 62 to 80 % by weight, 63 to 80 % by weight, 64 to 80 % by weight, 65 to 80 % by weight, 60 to 75 % by weight, 61 to 75 % by weight, 62 to 75 % by weight, 63 to 75 % by weight, 64 to 75 % by weight, 65 to 75 % by weight, or 65 to 72 % by weight based on the total weight of the biodegradable resin composition and a second mixing step of preparing a biodegradable resin composition including the inorganic filler in an amount of 30 to 85 % by weight, 30 to 80 % by weight, 30 to 75 % by weight, 30 to 70 % by weight, 35 to 85 % by weight, 35 to 80 % by weight, 35 to 75 % by weight, 35 to 70 % by weight, 40 to 85 % by weight, 40 to 80 % by weight, 40 to 75 % by weight, 40 to 70 % by weight, 45 to 85 % by weight, 45 to 80 % by weight, 45 to 75 % by weight, 45 to 70 % by weight, 50 to 85 % by weight, 50 to 80 % by weight, 50 to 75 % by weight, or 50 to 70 % by weight based on the total weight of the biodegradable resin composition.

The one or more mixing steps may be a tandem continuous process. The mixing step may be performed at a temperature of 150 to 190 °C, 150 to 180 °C, or 160 to 180 °C. When the range is satisfied, an increase in torque during the mixing step may be reduced, and the thermal decomposition of the mixed biodegradable resin composition may be reduced.

Step (c) may include adding a hydrolysis inhibitor. Based on the total weight of the biodegradable resin composition, the hydrolysis inhibitor may be added in an amount of 0.1 % by weight to 5.0 % by weight, 0.1 % by weight to 4.0 % by weight, 0.1 % by weight to 3.0 % by weight, 0.1 % by weight to 2.0 % by weight, 0.1 % by weight to 1.5 % by weight, or 0.1 % by weight to 1.0 % by weight. The hydrolysis inhibitor may include a carbodiimide-based compound. The carbodiimide-based compound reacts with moisture and acid to convert into a urea structure, which may lower the reactivity among moisture, an acid, and the ester groups included in the biodegradable resin. As a result, the phenomenon of the biodegradable resin being hydrolyzed by moisture and acid may be reduced, and consequently, the water resistance of the biodegradable resin composition may be improved.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'cyclohexylcarbodiimide, N,N'-di-2,6-diisopropyphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropy diisocyanate.

The manufacturing method may include step (d) of preparing pellets of the biodegradable resin composition.

In step (d), the biodegradable resin composition is fed into an extrusion molding machine equipped with a single screw or an extrusion molding machine equipped with a twin screw, extruded at a temperature of 150 °C to 180 °C, cut with a hot-cut pellet cutter, and cooled at a temperature of 30 °C or less, 25 °C or less, 5 to 50 °C, 10 to 30 °C, 15 to 25 °C, or 20 to 25 °C to obtain pellets. In the cutting step, pellet cutting machines used in the art may be used without particular limitations,

and the shape of the manufactured pellets is not particularly limited.

The manufacturing method may include step (e) of drying and melt-extruding the pellets.

The drying may be performed at 60 °C to 100 °C, 65 °C to 95 °C, 70°C to 90 °C, or 75 °C to 85 °C for 2 hours to 12 hours, 3 hours to 12 hours, or 4 hours to 10 hours. When the conditions are satisfied, the appearance and mechanical and chemical properties of the biodegradable molded article may be further improved.

The melt-extruding may be performed at 270 °C or less, 265 °C or less, 260 °C or less, 255 °C or less, 130 °C to 270 °C, 130 °C to 250 °C, 140 °C to 230 °C, 150 °C to 200 °C, or 150 °C to 180 °C. The melt-extruding may be performed by a blown film process or a press process without particular limitation. During the melt-extruding, torque may be 100 N·m to 300 N·m or 150 N·m to 250 N·m.

Hereinafter, the present invention will be described in more detail based on examples and comparative examples. However, the examples and comparative examples are presented to explain the present invention in more detail, and the present invention is not limited to the examples and comparative examples.

## Examples

- Biodegradable resin #1: Ecopond (PBAT resin)
- Biodegradable resin #2: NatureWorks Corp., 4032D (PLA resin)
- Calcium carbonate: Omya Corp.
- Plasticizer: Glycerol monostearate (GMS)
- Lubricant #1: Stearyl stearate
- Lubricant #2: Calcium stearate
- Chain extender: Joncryl, BASF Co.
- Antioxidant #1: Phenolic antioxidant, AO-60, Adeca Korea Co.
- Antioxidant #2: Phosphite-based antioxidant, 2112, Adeca Korea Co.

### Example 1

Biodegradable resin #1, calcium carbonate, plasticizer, Antioxidant #1 and Antioxidant #2 were added in a weight ratio of 49.8:49:1:0.05:0.15 to a kneader reactor and kneaded at 175°C. Next, the mixture was extruded using a single-screw extruder, and then cut and cooled using a hot-cut pellet cutter to prepare a pelletized biodegradable resin composition.

### Examples 2 to 4 and Comparative Examples 1 to 3

Pelletized biodegradable resin compositions were prepared by the same process as in Example 1, except that the pelletized biodegradable resin compositions were prepared with the compositions described in Table 1 below.

[Table 1]

| Classifi cation | Biodegr adable resin #1 | Biodegr adable resin #2 | Calci um carbo nate | Plasti cizer | Lubri cant #1 | Lubri cant #2 | Chai n exte nder | Antiox idant #1 | Antiox idant #2 |
|---|---|---|---|---|---|---|---|---|---|
| Unit | % by weight | | | | | | | | |
| Exampl e 1 | 49.80 | - | 49.00 | 1.00 | - | - | - | 0.05 | 0.15 |
| Exampl e 2 | 28.80 | - | 70.00 | 1.00 | - | - | - | 0.05 | 0.15 |
| Exampl e 3 | 49.80 | - | 49.00 | 1.00 | - | - | 0.01 | 0.05 | 0.15 |
| Exampl e 4 | 51.60 | - | 47.00 | - | 0.70 | 0.50 | - | 0.05 | 0.15 |
| Compar ative Exampl e 1 | 100 | - | - | - | | | - | - | - |
| Compar ative Exampl e 2 | 35.80 | 14.00 | 49.00 | 1.00 | - | - | - | 0.05 | 0.15 |

(continued)

| Classification | Biodegradable resin #1 | Biodegradable resin #2 | Calcium carbonate | Plasticizer | Lubricant #1 | Lubricant #2 | Chain extender | Antioxidant #1 | Antioxidant #2 |
|---|---|---|---|---|---|---|---|---|---|
| Unit | % by weight | | | | | | | | |
| Comparative Example 3 | 72.80 | 14.00 | 10.00 | 1.00 | - | - | 2.00 | 0.05 | 0.15 |

## Experimental examples

<Manufacture of samples>

After placing each of the pelletized biodegradable resin compositions prepared in Examples 1 to 4 and Comparative Examples 1 to 3 on a flat stainless steel (SUS) plate with a horizontal length of 12 cm and a vertical length of 12 cm, a biodegradable resin sheet having an average thickness of 0.9 mm was prepared under conditions of 180°C temperature and 20 MPa pressure. Next, the sheet was cut into a horizontal length of 4 cm and a vertical length of 4 cm to prepare a biodegradable resin sheet sample.

<Manufacture of films>

Each of the pelletized biodegradable resin compositions prepared in Examples 1 to 4 and Comparative Examples 1 to 3 was melt-extruded at 160°C using a blown film extrusion line (Yujin Engineering Co.), and then a biodegradable resin film having a thickness of 30 μm was manufactured.

### Experimental Example 1 - Rate of change in number average molecular weight

The first number average molecular weight ($Mn_0$) of each of the samples manufactured in Examples 1 to 4 and Comparative Examples 1 to 3 was measured using gel permeation chromatography (GPC) under the following measurement conditions. Next, the samples were maintained at a temperature of 70°C and a relative humidity of 95% for 10 days, and then the second number average molecular weight ($Mn_1$) was measured under the same measurement conditions as follows.

The rate of change in the number average molecular weight (ΔMn) was calculated by the following equation, and the results are shown in Table 2 below:

Rate (ΔMn) of change in number average molecular weight = $[(Mn_0 - Mn_1) / Mn_0] \times 100$

<Measurement conditions>

- Instrument: APC system (Waters)
- Column: Acquity APC XT Column 45A (4.6*150 mm) x 2
- Mobile phase: THF
- Flow rate: 0.5 mL/min
- Sample concentration: 10 mg/10 mL
- Injection volume: 10 μℓ
- Detector: RID 40°C
- Total run time: 10 min

### Experimental Example 2 - Rate of change in inherent viscosity

Each of the samples manufactured in Examples 1 to 4 and Comparative Examples 1 to 3 was put into 50 ml of 2-chlorophenol, dissolved at 100°C for 30 minutes, and then the first inherent viscosity ($IV_0$) was measured using an automatic viscometer (LVDV-I Prime viscometer). Next, the samples were maintained at a temperature of 70°C and a relative humidity of 95% for 10 days, and then the second inherent viscosity ($IV_1$) was measured under the same

measurement conditions.

The rate of change in the inherent viscosity (ΔIV) was calculated by the following equation, and the results are shown in Table 2 below.

$$\text{Rate } (\Delta IV) \text{ of change in inherent viscosity} = [(IV_0 - IV_1) / IV_0] \times 100$$

**Experimental Example 3 - Biodegradability**

An inoculum container with only compost manufactured at a compost plant was prepared, and respective test containers were prepared by adding the samples manufactured in Examples 1 to 4 and Comparative Examples 1 to 3, in an amount of 5 % by weight of the dry weight of the compost, onto the compost. Next, the test containers were cultured for 180 days under conditions of 60°C temperature, 90% humidity, and an oxygen concentration of 6% or more, and the carbon dioxide generated from each test container was captured and titrated with a phenolphthalein aqueous solution to measure the amount of carbon dioxide generated.

Biodegradability was calculated by the following equation, and the results are shown in Table 2.

Biodegradability (%) = [(Amount of $CO_2$ generated in test container) - (Amount of $CO_2$ generated in inoculum container)] / (Theoretical amount of $CO_2$ generated in test container) × 100

**Experimental Example 4 - Weight swelling ratio**

The weight (A) of each of the samples manufactured in Examples 1 to 4 and Comparative Examples 1 to 3 was measured. Next, the sample was put into 50 ml of an ethanol solvent and stored at room temperature for 24 hours, and then the surface of the sample was wiped twice using gauze, and then the weight (B) of the sample was measured. The weight swelling ratio was calculated by the following equation.

Weight swelling ratio (%) = [Weight of sample (B) - Weight of sample (A)] / Weight of sample (A) × 100

Water resistance was evaluated according to the following criteria, and the results are shown in Table 2 below.

- A: Weight swelling ratio is 2% or less.
- B: Weight swelling ratio is greater than 2% and 5% or less.
- C: Weight swelling ratio is greater than 5%.

**Experimental Example 5 - Solvent resistance**

Each of the films manufactured in Examples 1 to 4 and Comparative Examples 1 to 3 was attached to plywood and exposed to the outside air, and then 50 ml of water ($H_2O$) was sprayed once a day for 10 days to observe the degree of damage to the biodegradable film.

The solvent resistance was evaluated according to the following criteria, and the results are shown in Table 2 below:

- A: Decomposed surface area relative to the total surface area of the film is 10% or less.

- B: Decomposed surface area relative to the total surface area of the film is greater than 10% and 20% or less.

- C: Decomposed surface area relative to the total surface area of the film is greater than 20% and 50 % or less.

- D: Decomposed surface area relative to the total surface area of the film is greater than 50%

**Experimental Example 6 - Tensile strength and elongation at break**

The samples manufactured in Examples 1 to 4 and Comparative Examples 1 to 3 were tested at a tensile speed of 100 mm/min using a universal testing machine (UTM, 4206-001) of INSTRON Co., and then a tensile strength and an elongation at break were measured by a program built into the measuring instrument, and the results are shown in Table 2 below.

**Experimental Example 7 - Moldability**

During the film manufacturing process of each of Examples 1 to 4 and Comparative Examples 1 to 3, bubble formation was observed by blowing air from below in a 160°C blown film extrusion line. Moldability was evaluated according to the following criteria, and the results are shown in Table 2 below.

- ◦: The shape of the bubble is good without being biased in one direction or bursting.
- ×: The shape of the bubble is not properly formed, is biased in one direction, or bursts.

**Experimental Example 8 - Adhesive properties**

During the film manufacturing process of each of Examples 1 to 4 and Comparative Examples 1 to 3, the degree to which surfaces stick to each other when winding the film was visually observed. Adhesive properties were evaluated according to the following criteria, and the results are shown in Table 2 below.

- ◦: Surfaces do not stick to each other during winding.

- ×: Surfaces stick to each other during winding and cannot be peeled off.

[Table 2]

| | Unit | Exam ple 1 | Exam ple 2 | Exam ple 3 | Exam ple 4 | Compara tive Example 1 | Compara tive Example 2 | Compara tive Example 3 |
|---|---|---|---|---|---|---|---|---|
| Water resistance control index (W-C Index)[1)] | - | 0.68 | 0.87 | 0.76 | 0.71 | 0.46 | 1.17 | 0.48 |
| IFC[2)] | % by weig ht | 49 | 70 | 49 | 47 | - | 49 | 10 |
| $Mn_0$ | g/m ol | 59,66 5 | 59,45 8 | 56,97 9 | 59,99 5 | 45,957 | 43,212 | 44,512 |
| $Mn_1$ | g/m ol | 38,25 1 | 43,75 2 | 34,39 8 | 39,35 2 | 24,674 | 17,508 | 25,353 |
| ΔMn[3] | % | 35.89 | 26.42 | 39.63 | 37.41 | 46.31 | 59.48 | 43.04 |
| $IV_0$ | dl/g | 0.67 | 0.42 | 0.67 | 0.66 | 1.31 | 0.55 | 1.22 |
| $IV_1$ | dl/g | 0.52 | 0.35 | 0.54 | 0.52 | 0.68 | 0.31 | 0.65 |
| ΔIV[4)] | % | 22.39 | 16.67 | 19.40 | 21.21 | 48.09 | 43.64 | 46.72 |
| Biodegrada bility | % | 90 | 95 | 90 | 90 | 80 | 90 | 80 |
| Weight swelling ratio | - | A | A | A | A | C | B | C |
| Solvent resistance | - | A | A | A | A | D | B | C |
| Tensile strength | MPa | 45 | 40 | 44 | 44 | 48 | 33 | 42 |
| Elongation at break | % | 350 | 300 | 340 | 350 | 400 | 220 | 330 |
| Moldability | - | ○ | ○ | ○ | ○ | ○ | × | × |
| Adhesive property | - | ○ | ○ | ○ | ○ | ○ | × | × |
| 1) Water resistance control index (W-C Index): ΔMn / 100 - IFC<br>2) Inorganic Filler Content (IFC): Content of inorganic filler (calcium carbonate) | | | | | | | | |

(continued)

| | | | | | | | |
|---|---|---|---|---|---|---|---|
| $\Delta IV^{4)}$ | % | 22.39 | 16.67 | 19.40 | 21.21 | 48.09 | 43.64 | 46.72 |
| 3) $\Delta$Mn: $[(Mn_0 - Mn_1) / Mn_0] \times 100$<br>4) $\Delta$IV: $[(IV_0 - IV_1) / IV_0] \times 100$ | | | | | | | | |

As can be seen in Tables 1 and 2, it was confirmed that Examples 1 to 4, in which the water resistance control index (W-C Index) was controlled within a specific range, were superior in water resistance compared to Comparative Examples 1 to 3, and that they were excellent in processability such as moldability and adhesive properties as well as mechanical properties such as tensile strength and elongation at break.

Specifically, Examples 1 to 4, in which the water resistance control index was controlled between 0.5 and 1, exhibited a tensile strength and an elongation at break equal to or higher than those of Comparative Example 1 having a water resistance control index of less than 0.5, and it was confirmed that water resistance was significantly improved. In addition, compared to Comparative Example 3 having a water resistance control index of less than 0.5, they exhibited equal or higher tensile strength and elongation at break, and it was confirmed that water resistance, moldability, and adhesive properties were excellent. In addition, compared to Comparative Example 2 having a water resistance control index exceeding 1, they exhibited equal or higher water resistance, and it was confirmed that tensile strength, the elongation at break, moldability, and adhesive properties were excellent.

Therefore, when controlling the water resistance control index of the biodegradable resin composition between 0.5 and 1, it was confirmed that water resistance was significantly improved without deterioration of mechanical properties, such as tensile strength and elongation at break and processability, of the biodegradable resin composition.

**Industrial Applicability**

Embodiments can be applied to a biodegradable resin composition and a biodegradable molded article including the same.

**Claims**

**1.** A biodegradable resin composition, comprising:

a biodegradable resin; and
an inorganic filler,
wherein the biodegradable resin composition has a water resistance control index (W-C Index) of 0.5 to 1, as represented by Equation 1 below:

[Equation 1]

$$\text{W-C Index} = \Delta Mn / 100 - IFC$$

where $\Delta$Mn is a rate of change in a number average molecular weight of the biodegradable resin composition, as measured by the following first measurement method, and the Inorganic Filler Content (IFC) is a content (% by weight) of the inorganic filler based on a total weight of the biodegradable resin composition:
[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate ($\Delta$Mn) is calculated by Equation 2 below:

[Equation 2]

$$[(Mn_0 - Mn_1) / Mn_0] \times 100$$

2. The biodegradable resin composition according to claim 1, wherein the first number average molecular weight ($Mn_0$) is 50,000 g/mol to 65,000 g/mol.

3. The biodegradable resin composition according to claim 1, wherein the second number average molecular weight ($Mn_1$) is 30,000 g/mol to 50,000 g/mol.

4. The biodegradable resin composition according to claim 1, wherein the number average molecular weight change rate ($\Delta Mn$) is 40 % or less.

5. The biodegradable resin composition according to claim 1, wherein, based on the total weight of the biodegradable resin composition, the inorganic filler is comprised in a content of 30 % by weight to 90 % by weight.

6. The biodegradable resin composition according to claim 1, wherein a rate of change in an inherent viscosity of the biodegradable resin of the sample is 40% or less, as measured by a second measurement method below:
[Second measurement method]

1) After putting the sample into 50 ml of 2-chlorophenol and dissolving it at 100°C for 30 minutes, a first inherent viscosity ($IV_0$) is measured using an automatic viscometer.
2) After maintaining the sample at a temperature of 70°C and a relative humidity of 95% for 10 days, a second inherent viscosity ($IV_1$) is measured using the automatic viscometer.
3) A rate ($\Delta IV$) of change in the inherent viscosity is calculated by Equation 3 below:

[Equation 3]

$$[(IV_0 - IV_1) / IV_0] \times 100$$

7. The biodegradable resin composition according to claim 6, wherein the first inherent viscosity ($IV_0$) is 0.3 dl/g to 1.0 dl/g.

8. The biodegradable resin composition according to claim 6, wherein the second inherent viscosity ($IV_1$) is 0.2 dl/g to 0.6 dl/g.

9. The biodegradable resin composition according to claim 1, wherein an elongation at break of the sample according to ASTM D882 is 200% to 800%.

10. A biodegradable molded article, comprising a biodegradable resin composition, wherein the biodegradable resin composition comprises:

a biodegradable resin; and
an inorganic filler,
wherein the biodegradable resin composition has a water resistance control index (W-C Index) of 0.5 to 1, as represented by Equation 1 below:

[Equation 1]

$$\text{W-C Index} = \Delta Mn / 100 - IFC$$

where $\Delta Mn$ is a rate of change in a number average molecular weight of the biodegradable resin composition, as measured by the following first measurement method, and the Inorganic Filler Content (IFC) is a content (% by weight) of the inorganic filler based on a total weight of the biodegradable resin composition:
[First measurement method]

1) After placing the biodegradable resin composition between a pair of flat stainless molds, a biodegradable resin sheet having an average thickness of 0.9 mm is manufactured under conditions of a temperature of 180°C and a pressure of 20 MPa.
2) After cutting the biodegradable resin sheet into a width of 4 cm and a length of 4 cm to prepare a sample of the biodegradable resin sheet, a first number average molecular weight ($Mn_0$) is measured using Gel Permeation Chromatography (GPC).
3) After maintaining the sample at a temperature of 70°C and a relative humidity of 95% for 10 days, a second number average molecular weight ($Mn_1$) is measured using GPC.
4) The number average molecular weight change rate (ΔMn) is calculated by Equation 2 below:

[Equation 2]

$$[(Mn_0 - Mn_1) / Mn_0] \times 100$$

**11.** The biodegradable molded article according to claim 10, wherein a rate of change in an inherent viscosity of the biodegradable resin of the sample is 40% or less, as measured by a second measurement method below:
[Second measurement method]

1) After putting the sample into 50 ml of 2-chlorophenol and dissolving it at 100°C for 30 minutes, a first inherent viscosity ($IV_0$) is measured using an automatic viscometer.
2) After maintaining the sample at a temperature of 70°C and a relative humidity of 95% for 10 days, a second inherent viscosity ($IV_1$) is measured using the automatic viscometer.
3) A rate (ΔIV) of change in the inherent viscosity is calculated by Equation 3 below:

[Equation 3]

$$[(IV_0 - IV_1) / IV_0] \times 100$$

**12.** The biodegradable molded article according to claim 10, wherein the biodegradable molded article is a nonwoven fabric, a vacuum molded sheet, a blow molded article, or an injection molded article.

**INTERNATIONAL SEARCH REPORT**

International application No. **PCT/KR2024/007271**

**A. CLASSIFICATION OF SUBJECT MATTER**

**C08K 3/013**(2018.01)i; **C08L 67/02**(2006.01)i; **C08K 3/26**(2006.01)i

According to International Patent Classification (IPC) or to both national classification and IPC

**B. FIELDS SEARCHED**

Minimum documentation searched (classification system followed by classification symbols)

C08K 3/013(2018.01); A61F 13/15(2006.01); B29B 11/14(2006.01); C08G 63/16(2006.01); C08G 63/78(2006.01); C08J 5/18(2006.01); C08L 101/16(2006.01); C08L 3/00(2006.01); C08L 67/04(2006.01); C08L 67/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 수지(biodegradable resin), 폴리락트산(polylactic acid, PLA), 무기 충전제(inorganic filler), 내가수성(water resistance)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0063856 A (SKC CO., LTD.) 09 May 2023 (2023-05-09) See paragraphs [0095] and [0208]-[0312]; claims 1-12; examples A1-A3, A5 and A7-A10; and tables 2-3 and 6. | 1-12 |
| A | KR 10-2012-0134937 A (KS CHEMICAL CO., LTD.) 12 December 2012 (2012-12-12) See claims 1 and 11. | 1-12 |
| A | KR 10-2023-0059925 A (HDC HYUNDAI ENGINEERING PLASTICS CO., LTD.) 04 May 2023 (2023-05-04) See claims 1, 2 and 8. | 1-12 |
| A | KR 10-2249171 B1 (PARK, Young Soo) 07 May 2021 (2021-05-07) See claim 1. | 1-12 |
| A | KR 10-0642289 B1 (LEE, Gyu-Deuk et al.) 02 November 2006 (2006-11-02) See claims 1 and 7. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2024** | **14 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/007271**

**C. DOCUMENTS CONSIDERED TO BE RELEVANT**

| Category* | Citation of document, with indication, where appropriate, of the relevant passages | Relevant to claim No. |
|---|---|---|
| A | JP 2003-041142 A (MITSUI CHEMICALS INC.) 13 February 2003 (2003-02-13)<br>See claim 1. | 1-12 |

Form PCT/ISA/210 (second sheet) (July 2022)

**INTERNATIONAL SEARCH REPORT**
**Information on patent family members**

International application No.
**PCT/KR2024/007271**

| Patent document cited in search report | Publication date (day/month/year) | Patent family member(s) | Publication date (day/month/year) |
| --- | --- | --- | --- |
| KR 10-2023-0063856 A | 09 May 2023 | EP 4428186 A1 | 11 September 2024 |
| | | TW 202330783 A | 01 August 2023 |
| | | WO 2023-080496 A1 | 11 May 2023 |
| KR 10-2012-0134937 A | 12 December 2012 | KR 10-1372581 B1 | 13 March 2014 |
| KR 10-2023-0059925 A | 04 May 2023 | KR 10-2587591 B1 | 11 October 2023 |
| KR 10-2249171 B1 | 07 May 2021 | None | |
| KR 10-0642289 B1 | 02 November 2006 | None | |
| JP 2003-041142 A | 13 February 2003 | JP 5041639 B2 | 03 October 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9096758 B
- US 4797468 A
- US 5470944 A
- US 5770682 A
- US 5821327 A
- US 5880254 A
- US 6326458 B


### Non-patent literature cited in the description


- *J. Bacteriol.*, 1997, vol. 179, 4821